# EUROPEAN PATENT APPLICATION

(11) **EP 3 868 333 A1**
(43) Date of publication of application: **25.08.2021**
(21) Application number: 19873878.3
(22) Date of filing: 08.10.2019
(51) Int. Cl.: A61C 17/00, A61C 19/00

(54) **DENTAL DEVICE FOR THE TREATMENT OF DENTAL ALVEOLI, METHOD FOR MANUFACTURING SAME AND KIT**

(30) Priority: 19.10.2018 ES 201831021
(71) Applicant: Llovera Muntañola, Jose Manuel, 08017 Barcelona (ES); Llovera Gonzalez, Gabriela, 08036 Barcelona (ES)
(72) Inventor: Llovera Muntañola, Jose Manuel, 08017 Barcelona (ES); Llovera Gonzalez, Gabriela, 08036 Barcelona (ES)
(74) Representative: Clarke Modet & Co.
(86) International application number: PCT/ES2019/070680
(87) International publication number: WO 2020/079298

(57) **Abstract**

Dental device for the treatment of dental alveoli, comprising: a suction element (2); and a dental impression (3) of a patient which defines at least one sealing surface (S_{A}) configured to seal an alveolus (A) of said patient. The sealing surface (S_{A}) has a suction hole (31) connected to the suction element (2) in order to create a vacuum in the alveolus (A). Method for manufacturing a dental device for the treatment of dental alveoli and a kit associated with it.

## Description

### Field of the invention

The present invention relates to a dental device for the treatment of dental alveoli, in particular, for achieving a good blood clot after the extraction of teeth in alveoli with little or no bleeding, thus preventing problems with infection and poor bone regeneration.

The present invention also relates to a method for manufacturing said dental device and to a kit associated with it.

The present invention is applicable in the field of dentistry in general and, especially, in subsequent treatments as a result of surgeries involving exodontia.

### Background of the invention

Dry socket consists of a fairly painful infection which is produced in the dental alveolus (cavity of the alveolar bone wherein the teeth are inserted), and which is associated with a dental extraction with little or no clot, for example, prior to the placement of a dental implant.

Thus, as mentioned above, these types of infections are usually caused by the loss of the blood clot which should remain in the alveolus after the extraction, which in turn causes the entry of saliva inside the alveolus and, consequently, the entry of microbes.

Currently, treatments are known the object of which is precisely to ensure the presence of a blood clot in the alveolus. One of them consists of scraping the alveolar bone in order to produce more blood, such that it concentrates in the alveolus. Another one consists of making small perforations in the alveolar walls with a bur, with the same purpose.

Another known technique is Plasma Rich in Growth Factors (PRGF). It consists of a more complex treatment wherein blood must be drawn from the vein of the patient, and the entire process of centrifuging said blood must be done in order to obtain growth factors in order to introduce them into the alveolus to be treated.

Generally, this type of treatment has an invasive nature that is quite uncomfortable for the patient, and/or has a certain complexity which makes it difficult for medical professionals to apply it.

The present invention solves the aforementioned problems by means of a dental device for the treatment of dental alveoli with little or no bleeding, which enables a good blood clot to be obtained in the alveolus in a manner which is simple, quick and comfortable for the patient, thus preventing problems with infection and poor bone regeneration (very important for the subsequent placement of dental implants).

The present invention also relates to a method for manufacturing said dental device and to a kit associated with it, which enable the assembly and use of said device by professionals of the sector in a quick and easy manner.

### Description of the invention

The dental device for the treatment of dental alveoli of the present invention, especially those having little or no bleeding post-extraction, comprises:
- a suction element; and
- a dental impression of a patient defining at least one sealing surface configured to seal one or more alveoli of said patient.

Said sealing surface has a suction hole connected to the suction element in order to create a vacuum in the alveolus or alveoli. The vacuum, or suction, created in the alveolus, in other words, in the cavity wherein the extracted tooth (non-molar tooth or molar) was housed, enables a good post-extraction blood clot to be achieved in the alveolus in a manner which is simple, quick and comfortable for the patient, thus preventing problems with infection and poor bone regeneration.

The suction element can adopt different manual and/or automatic shapes and/or configurations which enable a vacuum to be created in the area wherein the extraction of one or more teeth from the patient has taken place. According to a preferred embodiment, the suction element is a syringe for injections (for example; for 5 ml.), in order to offer greater simplicity of the device and facilitate the use thereof by users.

The shape and/or configuration of the dental impression depends on the number of alveoli to be treated once the teeth have been extracted, as well as the rest of the teeth remaining in the jaw of the patient, or in a portion thereof, once said operation has been performed.

The alveoli to be treated, either one or more, define an extraction area which, once the dental impression is arranged thereon, is sealed by the sealing surface. Thus, this prevents the entry of air around the alveolus and, therefore, guaranteeing that a certain vacuum is produced around it when the suction element is actuated.

In those cases wherein the patient has a tooth close to the area wherein the extraction has been produced, the dental impression preferably comprises at least one dental cavity which defines a securing surface configured to fit over one or more of the teeth of the patient. Said securing surface favours the securing of the dental impression during the suction process. In edentulous patients, or in areas to be treated without teeth, these dental cavities are not necessary for the correct operation of the device.

Regardless of the presence or lack of dental cavities, preferably, the dental impression comprises a perimeter skirt which defines a support surface configured to be supported on the gum of the patient, favouring the suitable securing of the dental impression during the suction process.

The dental impression is made of silicone or any other material with similar features which enables the moulding thereof, as well as the suitable sealing of the area to be treated. Preferably, the dental impression is made of heavy silicone since it offers a better seal.

Preferably, the device comprises a flexible tube which connects the suction element to the suction hole. For example, a transparent tube of the type used for administrating serum via drip. However, in other embodiments, it is possible to omit said flexible tube by directly connecting the suction element to the suction hole.

Preferably, the flexible tube comprises an approximate external diameter of 3 to 4 mm and an approximate internal diameter of 2 to 3 mm.

Preferably, the flexible tube comprises an approximate length of 6 to 10 cm, suitable for facilitating the use thereof without bothering the patient.

The above dimensions may be larger or smaller in other embodiments, depending on the flexible tube to be used.

Preferably, the flexible tube is scaled in millimetres, or it has other measurement marks, in order to determine the amount of blood drawn. This can also be used to perform histological studies, obtaining from a certain amount of blood the number of bone cells (osteocytes) found in the alveolus.

The method for manufacturing a dental device for the treatment of dental alveoli of the present invention comprises the following steps:
a) arranging a dental impression which has a filler protrusion of an alveolus of a patient;
b) trimming said filler protrusion until a sealing surface, preferably flat, is formed configured to seal said alveolus;
c) making a suction hole in said sealing surface; and
d) connecting a suction element to said suction hole.

Preferably, step a) previously comprises the following steps:
a0.1) filling a tray using a filler material for dental impressions;
a0.2) taking a dental impression of the area to be treated, or extraction area, of a patient, centring the filler material on one or more alveoli of said patient, in other words, making sure that the exodontia area is as centred as possible; and
a0.3) extracting the dental impression from the tray.

When the dental impression is separated from the tray, the filler material has taken the shape of the extraction area, whether or not there are teeth therein. In the area wherein it is of interest for the blood clot to be formed, a filler protrusion can be seen which penetrates the alveolus.

Preferably, step b) comprises the following steps:
b1) trimming the filler protrusion down to the base thereof; and
b2) maintaining the marginal edges.

A scalpel or any other suitable cutting instrument can be used to trim the filler protrusion. The cut reaches the base thereof, leaving a few millimetres corresponding to the thickness of the gum, for example, about 3 mm.

The filler material which is left between the papillae and any ridges which makes it difficult to reposition the dental impression in the mouth of the patient is also trimmed. However, the marginal edges of the dental impression are maintained, since they favour the support thereof, thus achieving a good seal of the area to be treated.

Preferably, step c) comprises the following steps:
c1) perforating the dental impression from side to side, centring the perforation with respect to the sealing surface.

In order to perforate the dental impression, a bur (for example; a calibrated 4 mm bur) or any other suitable perforating instrument can be used.

Preferably, step d) comprises the following steps:
d1) connecting a flexible tube at a first end thereof to the suction element and at a second end thereof to the suction hole.

The second end of the flexible tube is connected to the suction hole on the outside of the dental impression, in other words, on the side opposite from that of the sealing surface.

Preferably, the method of the present invention additionally comprises the following step:
e) smearing a support surface of the dental impression, peripheral to the sealing surface, with Vaseline in order to achieve a good peripheral seal.

Once the dental device has been manufactured according to the method described above, it is then used as follows. First, the dental impression is placed in the mouth of the patient, and more specifically, on the area thereof to be treated wherein the alveolus or alveoli are located. Once it has been verified that the dental impression is in place, it is squeezed with one hand, while the syringe is aspirated with the other until blood enters the flexible tube. Next, there is a wait time of about 3 minutes (clotting time), and after said time has passed, the flexible tube is cut with scissors and the dental impression is removed.

The kit for manufacturing a dental device for the treatment of dental alveoli of the present invention comprises:
- at least one tray for dental impressions; and
- at least one suction element, preferably a syringe.

Preferably, the kit of the present invention additionally comprises:
- at least one flexible tube.

Preferably, the kit of the present invention additionally comprises:
- a filler material for dental impressions.

Preferably, the kit of the present invention additionally comprises:
- at least one bur for perforating.

A replacement kit formed by a suction element, preferably a syringe, and a flexible tube, enables the disposable elements of the kit of the present invention to be replaced, keeping the rest for the reuse thereof (tray, filler material, bur).

In all the above cases, both the kit for manufacturing a dental device and the replacement kit are supplied properly sterilised for the suitable use thereof.

### Brief description of the drawings

What follows is a very brief description of a series of drawings that aid in better understanding the invention, and which are expressly related to one embodiment of said invention which are presented by way of non-limiting examples of the same.
Figure 1 represents a perspective view of the dental device for the treatment of dental alveoli of the present invention.
Figure 2 represents a perspective view of the dental impression of figure 1.
Figure 3 represents an example of application of the dental device of figure 1.
Figures 4a-4e represent a sequence of views with the manufacturing steps of the dental device of figure 1, according to the manufacturing method of the present invention.
Figure 5 represents a schematic view of a kit for manufacturing the dental device of figure 1, according to a first example.
Figure 6 represents a schematic view of a kit for manufacturing the dental device of figure 1, according to a second example.

### Detailed description of the invention

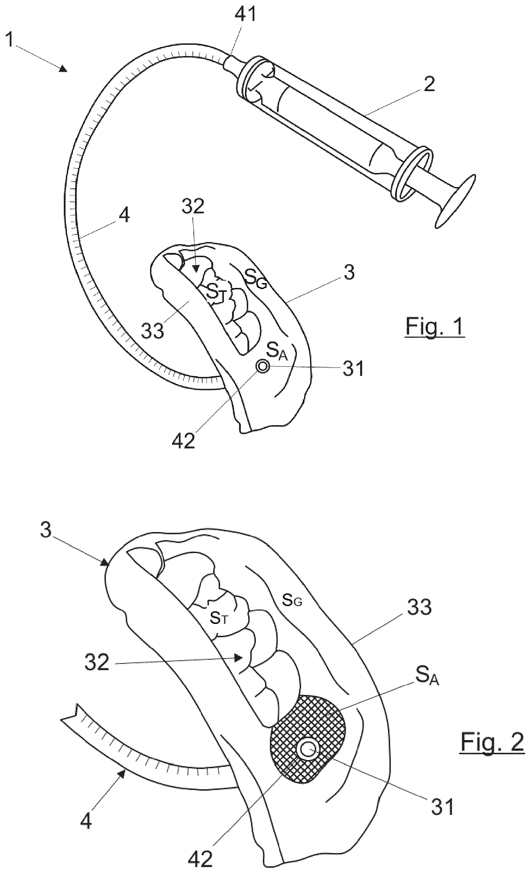

As seen in Figures 1 and 2, the dental device (1) for the treatment of dental alveoli (A) of the present invention comprises:
- a suction element (2) formed by a syringe; and
- a dental impression (3) of a patient which defines at least one sealing surface (S_{A}) configured to seal an alveolus (A) of said patient;
wherein said sealing surface (S_{A}) has a suction hole (31) connected to the suction element (2) in order to create a vacuum in the alveolus (A).

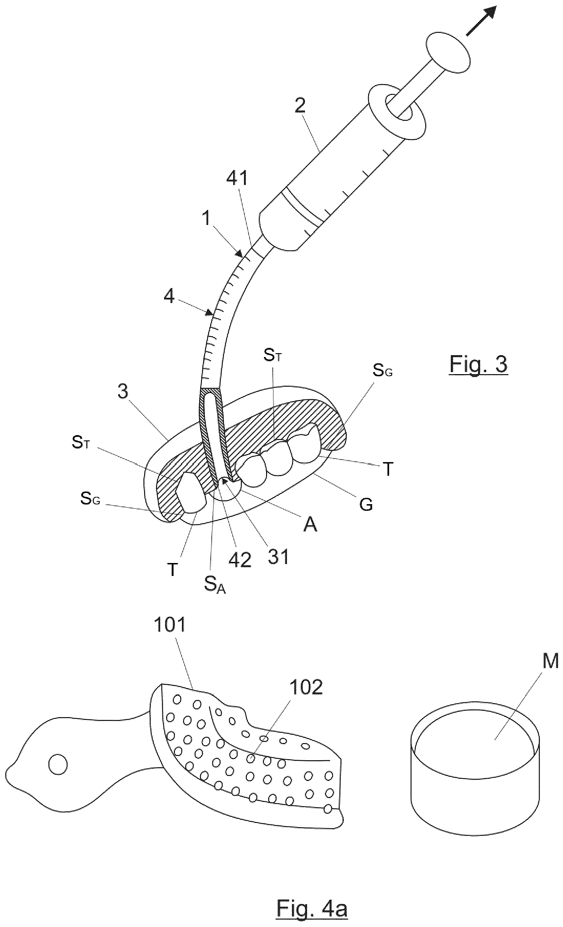

The dental impression (3) comprises at least one dental cavity (32) which defines a securing surface (S_{T}) configured to fit over one or more teeth (T) of the patient, Figure 3.

The dental impression (3) comprises a perimeter skirt (33) which defines a support surface (S_{G}) configured to be supported on the gum (G) of the patient, favouring the suitable securing of the dental impression (3) during the suction process.

The dental impression (3) is made of silicone or any other material with similar features which enables the moulding thereof, as well as the suitable sealing of the area to be treated, for example, made of heavy silicone.

The device (1) comprises a flexible tube (4) which connects the suction element (2) to the suction hole (31). The flexible tube (4) comprises an external diameter of 3 to 4 mm and an internal diameter of 2 to 3 mm, as well as an approximate length of 6 to 10 cm, for example. The flexible tube (4) is scaled in millimetres, or it has other measurement marks, in order to determine the amount of blood suctioned.

Figure 3 represents an example of application of the dental device (1) arranged on the area to be treated of the patient. As seen, the sealing surface (S_{A}) has a suction hole (31) connected to the suction element (2) through the flexible tube (4) in order to create a vacuum in the alveolus (A). The securing surface (S_{T}) fits on several teeth (T) of the patient, while the support surface (S_{G}) is supported on the gum (G) of the patient, favouring the suitable securing of the dental impression (3) during the suction process.

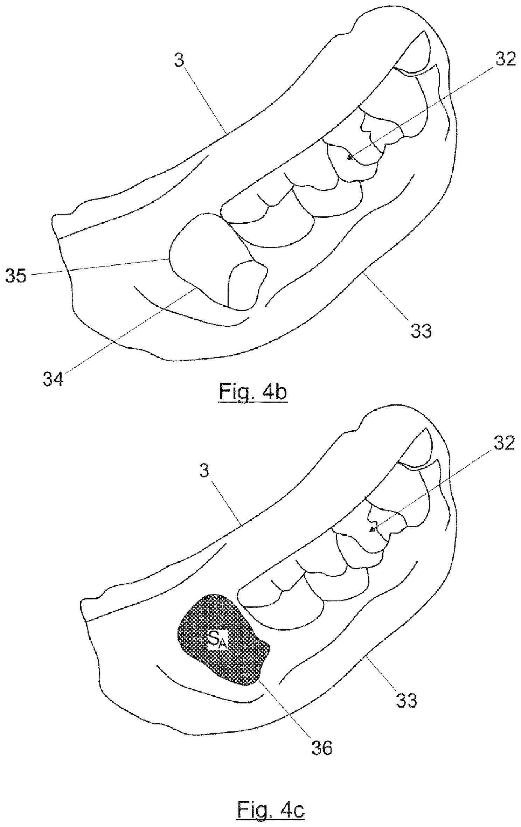

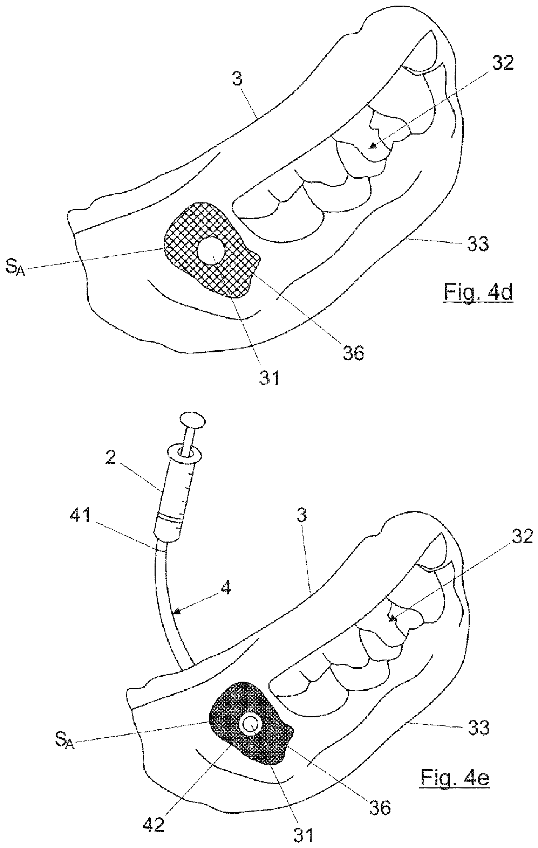

As seen in Figures 4a-4e, the method for manufacturing the dental device (1) of the present invention comprises the following steps:
a) arranging a dental impression (3) which has a filler protrusion (34) of an alveolus (A) of a patient, Figure 4b;
b) trimming said filler protrusion (34) until a sealing surface (S_{A}), preferably flat, is formed configured to seal said alveolus (A), Figure 4c;
c) making a suction hole (31) in said sealing surface (S_{A}), Figure 4d; and
d) connecting a suction element (2) to said suction hole (31), Figure 4e.

Step a) previously comprises the following steps:
a0.1) filling a tray (101), in this case provided with perforations (102), using a filler material (M) for dental impressions (3), for example, heavy silicone, Figure 4a;
a0.2) taking a dental impression (3) of the area to be treated, or extraction area, of a patient, centring the filler material (M) on an alveolus (A) of said patient, in other words, making sure that the exodontia area is as centred as possible; and
a0.3) extracting the dental impression (3) from the tray (101), Figure 4b.

When the dental impression (3) is separated from the tray (101), the filler material (M) has taken the shape of the extraction area, Figure 4b. In the area wherein it is of interest for the clot to be formed, a filler protrusion (34) can be seen which penetrates the alveolus (A).

As shown in Figures 4b and 4c, step b) comprises the following steps: b1) trimming the filler protrusion (34) down to the base (35) thereof; and b2) maintaining the marginal edges (36).

A scalpel or any other suitable cutting instrument can be used to trim the filler protrusion (34). The cut reaches the base (35) thereof, leaving a few millimetres corresponding to the thickness of the gum (G), for example, about 3 mm.

The filler material (M) which is left between the papillae and any ridges which makes it difficult to reposition the dental impression (3) in the mouth of the patient is also trimmed. However, the marginal edges (36) of the dental impression (3) are maintained, since they favour the support thereof, thus achieving a good seal of the area to be treated.

As shown in Figure 4d, step c) comprises the following steps:
c1) perforating the dental impression (3) from side to side, centring the perforation with respect to the sealing surface (S_{A}).

In order to perforate the dental impression (3), a bur (for example; a calibrated 4 mm bur) or any other suitable perforating instrument can be used, the diameter of which coincides with that of the end of the suction element (2) or with the external diameter of the flexible tube (4) to be used.

As shown in Figure 4e, step d) comprises the following steps:
d1) connecting a flexible tube (4) at a first end (41) thereof to the suction element (2) and at a second end (42) thereof to the suction hole (31).

The second end (42) of the flexible tube (4) is connected to the suction hole (2) on the outside of the dental impression (3), in other words, on the side opposite from that of the sealing surface (S_{A}).

The method of the present invention additionally comprises the following step:
e) smearing a support surface (S_{G}) of the dental impression (3), peripheral to the sealing surface (S_{A}), with Vaseline in order to achieve a good peripheral seal.

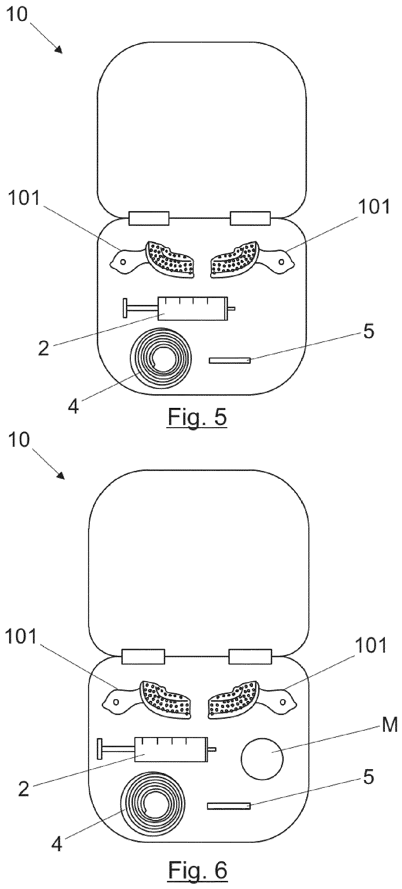

Figure 5 shows a schematic view of a kit (10) for manufacturing the dental device (1), according to a first exemplary embodiment, which comprises:
- two trays (101) for dental impressions (3), right and left, partially disposable, made of plastic or another material, with holes as perforations (102); and
- at least one suction element (2) formed by a syringe for injections, preferably four;
- at least one flexible tube (4), preferably four;
- at least one bur (5) for perforating.

Figure 6 represents a schematic view of a kit (10) for manufacturing the dental device (1), according to a second exemplary embodiment, which additionally comprises a filler material (M) for dental impressions (3), for example, heavy silicone.

## Claims

1. A dental device for the treatment of dental alveoli, **characterised in that** it comprises:
- a suction element (2); and
- a dental impression (3) of a patient which defines at least one sealing surface (S_{A}) configured to seal an alveolus (A) of said patient; wherein said sealing surface (S_{A}) has a suction hole (31) connected to the suction element (2) in order to create a vacuum in the alveolus (A).

2. The dental device according to claim 1, **characterised in that** the suction element (2) is a syringe.

3. The dental device according to any of claims 1 to 2, **characterised in that** the dental impression (3) comprises at least one dental cavity (32) which defines a securing surface (S_{T}) configured to fit over one or more teeth (T) of the patient.

4. The dental device according to any of claims 1 to 3, **characterised in that** the dental impression (3) comprises a perimeter skirt (33) which defines a support surface (S_{G}) configured to be supported on the gum (G) of the patient.

5. The dental device according to any of claims 1 to 4, **characterised in that** the dental impression (3) is made of heavy silicone.

6. The dental device according to any of claims 1 to 5, **characterised in that** it comprises a flexible tube (4) which connects the suction element (2) to the suction hole (31).

7. The dental device according to claim 6, **characterised in that** the flexible tube (4) comprises an approximate external diameter of 3 to 4 mm and an approximate internal diameter of 2 to 3 mm.

8. The dental device according to any of claims 6 to 7, **characterised in that** the flexible tube (4) has an approximate length of 6 to 10 cm.

9. A method for manufacturing a dental device for the treatment of dental alveoli, **characterised in that** it comprises the following steps:
a) arranging a dental impression (3) which has a filler protrusion (34) of an alveolus (A) of a patient;
b) trimming said filler protrusion (34) until a sealing surface (S_{A}) is formed configured to seal said alveolus (A);
c) making a suction hole (31) in said sealing surface (S_{A}); and
d) connecting a suction element (2) to said suction hole (31).

10. The method according to claim 9, **characterised in that** step a) previously comprises the following steps:
a0.1) filling a tray (101) using a filler material (M) for dental impressions (3);
a0.2) taking a dental impression (3) of a patient, centring the filler material (M) on an alveolus (A) of said patient; and
a0.3) extracting the dental impression (3) from the tray (101).

11. The method according to any of claims 9 to 10, **characterised in that** step b) comprises the following steps:
b1) trimming the filler protrusion (34) down to the base (35) thereof; and
b2) maintaining the marginal edges (36).

12. The method according to any of claims 9 to 11, **characterised in that** step c) comprises the following steps:
c1) perforating the dental impression (3) from side to side, centring the perforation with respect to the sealing surface (S_{A}).

13. The method according to any of claims 9 to 12, **characterised in that** step d) comprises the following steps:
d1) connecting a flexible tube (4) at a first end (41) thereof to the suction element (2) and at a second end (42) thereof to the suction hole (31).

14. The method according to any of claims 9 to 13, **characterised in that** additionally it comprises the following step:
e) smearing a support surface (S_{G}) of the dental impression (3), peripheral to the sealing surface (S_{A}), with Vaseline.

15. A kit for manufacturing a dental device for the treatment of dental alveoli, **characterised in that** it comprises:
- at least one tray (101) for dental impressions (3); and
- at least one suction element (2).

16. The kit according to claim 15, **characterised in that** additionally it comprises:
- at least one flexible tube (4).

17. The kit according to any of claims 15 to 16, **characterised in that** additionally it comprises:
- a filler material (M) for dental impressions (3).

18. The kit according to any of claims 15 to 17, **characterised in that** additionally it comprises:
- at least one bur (5) for perforating.

19. The kit according to any of claims 15 to 18, **characterised in that** the suction element (2) is a syringe.
